# EUROPEAN PATENT SPECIFICATION

(11) **EP 3 176 663 B1**
(45) Date of publication and mention of the grant of the patent: **30.12.2020**
(21) Application number: 16169099.5
(22) Date of filing: 11.05.2016
(51) Int. Cl.: G05B 23/02, G07C 5/08, G07C 5/00, G05B 19/042

(54) **FAULT DIAGNOSIS METHOD FOR VEHICLE**
FEHLERDIAGNOSEVERFAHREN FÜR FAHRZEUG
PROCÉDÉ DE DIAGNOSTIC DE DÉFAILLANCE POUR VÉHICULE

(30) Priority: 01.12.2015 KR 20150169985
(43) Date of publication of application: 07.06.2017
(73) Proprietor: Hyundai Motor Company, Seoul 137-938 (KR)
(72) Inventor: KIM, Seung Bum, 13608 Seongnam-si, Gyeonggi-do (KR)
(74) Representative: Viering, Jentschura & Partner mbB Patent- und Rechtsanwälte

(56) References cited:
- US-A1- 2011 118 932
- US-A1- 2011 172 874
- US-A1- 2012 035 803
- US-A1- 2013 159 240

## Description

### BACKGROUND

### 1. Field of the Invention

The present invention relates to a fault diagnosis method for a vehicle, which detects a latent fault in the vehicle and enables precise fault diagnosis to be performed in a production line or a vehicle repair shop.

### 2. Description of the Related Art

Typically, during the final stage of vehicle production, an End of Line (EOL) procedure is conducted for checking whether individual functions of each produced vehicle are normal or abnormal.

Such an EOL procedure is intended to examine whether individual functions of a target vehicle to be checked are normal or abnormal. Here, an Engine Control Unit (ECU) determines whether the operability of engine control sensors, actuators, and the engine itself is normal or abnormal, and displays a Diagnostic Trouble Code (DTC). A worker of a production line carries out an operation of checking and repairing parts of the target vehicle, based on the displayed DTC.

The DTC is displayed when an error count occurring during the checking of the target vehicle exceeds a preset reference value. In accordance with this check, even if the part of the vehicle has a symptom of a latent fault in the production line, the corresponding part is determined to be normal when the error count does not exceed the preset reference value. Accordingly, a problem arises in that, due to a vehicle fault that will subsequently occur, the time required to check and repair the vehicle may increase.

From US 2012/035803 A1 e.g. a parameter identification-based fault isolation technique provided for improving fault code settings and isolating faults is known, wherein the known technique fixes a diagnostic trouble code (DTC).

The foregoing is intended merely to aid in the better understanding of the background of the present invention, and is not intended to mean that the present invention falls within the purview of the related art that is already known to those skilled in the art.

### SUMMARY

An object of the present invention is to provide a fault diagnosis method for a vehicle, which adds a reference engineering code (REC) required to display a latent abnormality in the vehicle in addition to a DTC, thus promptly determining whether there is an abnormality in engine control, and consequently improving the ease of checking and repairing the vehicle based on this prompt determination.

In order to accomplish the above object, the present invention is directed to a fault diagnosis method for a vehicle, including steps of: detecting, by a controller, whether a reference engineering code (REC) has been generated; if the reference engineering code (REC) has been generated as a result of performing the detecting step, measuring, by the controller, a time for which the reference engineering code (REC) has been generated; after the measuring step, calculating, by the controller, a percentage of the reference engineering code (REC), based on both the time for which the reference engineering code (REC) has been generated and a preset time; after the calculating step, storing, by the controller, the reference engineering code (REC) and the percentage of the reference engineering code (REC); and after the storing step, when a request signal is received from a diagnostic device, providing, by the controller, an output signal that includes the stored reference engineering code (REC) and the stored percentage of the reference engineering code (REC) to the diagnostic device.

The calculating step may include calculating, by the controller, the percentage of the reference engineering code (REC) by dividing the time for which the reference engineering code (REC) has been generated by the preset time and by multiplying a resulting value by 100.

The preset time may be a time for which the reference engineering code (REC) has been generated until the diagnostic trouble code (DTC) is fixed.

The diagnostic device may be configured to transmit a request signal to the controller depending on manipulation of a user and to display the reference engineering code (REC) and the percentage of the reference engineering code (REC) in response to the output signal received from the controller.

The fault diagnosis method may further include, after the storing step, when a request signal is not received from the diagnostic device, again performing, by the controller, the detecting step.

The fault diagnosis method may further include, before the storing step, when a previously stored percentage of the reference engineering code (REC) is less than the percentage of the reference engineering code (REC) currently calculated at the calculating step, storing, by the controller, the previously stored percentage of the reference engineering code (REC).

In accordance with the fault diagnosis method having the above-described configuration, a latent fault in a vehicle may be detected in a production line or a repair shop, thus allowing a worker to promptly check and repair the vehicle.

Further, the present invention may determine latent abnormalities in vehicle parts and allow the parts to be suitably replaced in preparation for latent faults, thus enabling the vehicle to be maintained in an optimal state.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a schematic view showing a fault diagnosis apparatus for a vehicle according to an embodiment of the present invention; and
FIG. 2 is a flowchart showing a fault diagnosis method for a vehicle according to an embodiment of the present invention.

### DESCRIPTION OF THE PREFERRED EMBODIMENTS

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Throughout the specification, unless explicitly described to the contrary, the word "comprise" and variations such as "comprises" or "comprising" will be understood to imply the inclusion of stated elements but not the exclusion of any other elements. In addition, the terms "unit", "-er", "-or", and "module" described in the specification mean units for processing at least one function and operation, and can be implemented by hardware components or software components and combinations thereof.

Further, the control logic of the present invention may be embodied as non-transitory computer readable media on a computer readable medium containing executable program instructions executed by a processor, controller or the like. Examples of computer readable media include, but are not limited to, ROM, RAM, compact disc (CD)-ROMs, magnetic tapes, floppy disks, flash drives, smart cards and optical data storage devices. The computer readable medium can also be distributed in network coupled computer systems so that the computer readable media is stored and executed in a distributed fashion, e.g., by a telematics server or a Controller Area Network (CAN).

Hereinafter, a fault diagnosis method for a vehicle according to embodiments of the present invention will be described in detail with reference to the attached drawings.

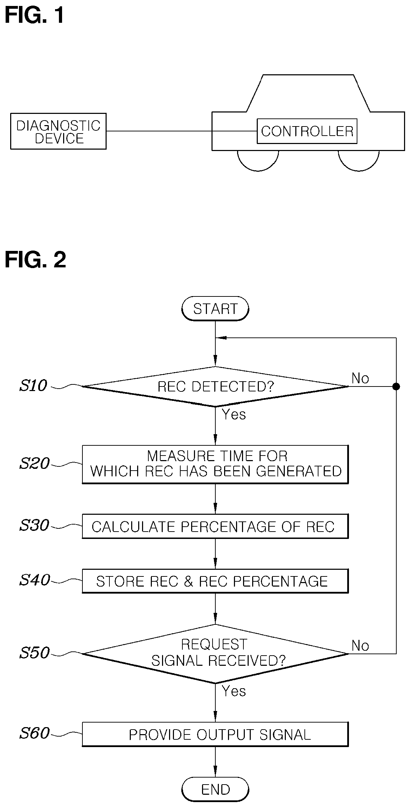

FIG. 1 is a schematic view showing a fault diagnosis apparatus for a vehicle according to an embodiment of the present invention. The fault diagnosis apparatus may include a controller configured to detect a reference engineering code (REC) generated in parts such as various types of sensors, used for engine control in the vehicle, and actuators; and a diagnostic device configured to transmit a request signal to the controller depending on the manipulation of an operator and receive an output signal that includes the reference engineering code (REC) and a percentage of the reference engineering code (REC), in response to the request. Detailed operations and features of the above-described components will be described later with reference to a diagnosis method.

FIG. 2 is a flowchart showing a fault diagnosis method for a vehicle according to an embodiment of the present invention. Referring to FIG. 2, the fault diagnosis method for a vehicle may include the step S10 of a controller detecting whether the reference engineering code (REC) for the vehicle has been generated; the step S20 of, if the reference engineering code (REC) has been generated as a result of performing the detection in step S10, the controller measuring the time for which the reference engineering code (REC) has been generated; the step S30 of, after the measurement step S20, the controller calculating a percentage of the reference engineering code (REC) based on both the time for which the reference engineering code (REC) has been generated and a preset time; the step S40 of, after the calculation step S30, the controller storing the reference engineering code (REC) and the percentage of the reference engineering code (REC); and the step S60 of, after the storage step S40, when a request signal is received from a diagnostic device, the controller providing an output signal, including both the stored reference engineering code (REC) and the stored percentage of the reference engineering code (REC), to the diagnostic device.

First, the controller checks sensors used for various types of engine control in the vehicle, various actuators, etc. If an error count, occurring when any of the specifications of a part such as a specific sensor or actuator falls out of a normal range, is detected, it may be considered that a reference engineering code (REC) has been generated in the corresponding part.

For example, the controller may be provided to check whether an abnormality occurs not only in various types of sensors, such as an outdoor temperature sensor, an exhaust cam position sensor, a knock sensor, a fuel level sensor, a battery sensor, a turbo-position sensor, an oxygen sensor, and a coolant temperature sensor, which are provided inside the vehicle, but also various types of valves, such as a turbo bypass valve and a fuzzy valve, and Controller Area Network (CAN) communication. However, target parts to be checked according to the embodiment are merely described to help the understanding of the present invention, and may be varied according to the vehicle without being limited to specific parts.

In conventional technology, a Diagnostic Trouble Code (DTC) is fixed only when an error count continuously occurs for a preset time in a specific vehicle part, but the reference engineering code (REC) according to the present invention is immediately output when an error count occurs. Even if the DTC is not fixed, the possibility of a latent fault in a specific vehicle part may be diagnosed and prevented based on the generated reference engineering code (REC).

When detecting the generation of a reference engineering code (REC) in a specific vehicle part, the controller measures the time for which the REC has been generated so as to determine the degree of a latent fault at step S20. Thereafter, the controller calculates the percentage of the reference engineering code (REC) based on both the time for which the reference engineering code (REC) has been generated and the preset time at step S30. Here, the preset time is characterized by being the time for which the reference engineering code (REC) has been generated until diagnostic trouble code (DTC) is fixed.

When the time for which the REC has been generated in a specific part reaches the preset time, the DTC is fixed. Thus, as the time for which the reference engineering code (REC) has been generated is longer, the probability of a latent fault in the specific part may be higher. That is, for the percentage of the reference engineering code (REC), which is a value obtained by dividing the time for which the reference engineering code (REC) has been generated by the preset time, is an index indicating the degree of a latent fault in the corresponding part.

For example, when the preset time for which diagnostic trouble code (DTC) has been fixed is 10 seconds, and the time for which the reference engineering code (REC) has been generated is 10 seconds, the percentage of the reference engineering code (REC) is calculated as 100%, and diagnostic trouble code (DTC) may also be output. Further, when the preset time is 10 seconds, and the time for which the reference engineering code (REC) has been generated is 5 seconds, a diagnostic trouble code (DTC) is not output, but the percentage of the reference engineering code (REC) is calculated as 50%. Thus, it can be proved that the fault in the corresponding part latently progresses by half.

Therefore, the controller stores the reference engineering code (REC) and the percentage of the reference engineering code (REC) at step S40, and provides an output signal, including the reference engineering code (REC) and the percentage of the reference engineering code (REC), to the diagnostic device when a worker of a production line or a mechanic of a repair shop requests the stored information through the diagnostic device, thus allowing the worker or the mechanic to recognize latent fault information in a specific vehicle part at step S60.

Here, the diagnostic device is characterized by being configured to transmit a request signal to the controller depending on the manipulation of a user, and display the reference engineering code (REC) and the percentage of the reference engineering code (REC) in response to the output signal received from the controller.

That is, when the diagnostic device is operated by the worker of the production line or the mechanic of the repair shop, it transmits a request signal, requesting diagnostic information, to the controller. The controller, having received the request signal, provides an output signal, including the stored reference engineering code (REC) and the stored percentage of the reference engineering code (REC), to the diagnostic device. Thereafter, the diagnostic device displays the reference engineering code (REC) and the percentage of the reference engineering code (REC) based on the received output signal, thus allowing the worker or mechanic to determine the degree of the latent fault in the specific vehicle part.

Meanwhile, when a request signal is not received from the diagnostic device after the storage step S40, the controller may again perform the detection step S10. That is, after the storage step S40, the controller detects whether a request signal has been received from the diagnostic device at step S50. If it is determined that a request signal has not been received, the controller again performs the detection step S10, thus updating the percentages of reference engineering codes (RECs) in various types of vehicle parts with the latest information.

Here, before the storage step S40, when the previously stored percentage of the reference engineering code (REC) is less than the percentage of the reference engineering code (REC) currently calculated at the calculation step S30, the controller stores the previously stored percentage of the reference engineering code (REC).

That is, the controller stores the percentage of reference engineering code (REC) when the degree of a latent fault in a specific part is maximized, so that the part may be repaired in preparation for the worst situation that may occur in the corresponding part upon diagnosing the vehicle, thus maximizing the safety of the vehicle.

According to the present invention, the controller may be an Engine Control Unit (ECU), which may detect the reference engineering code (REC) of the vehicle through a separate detection device or may directly detect REC, and may store the calculated percentage of the reference engineering code (REC) and the detected reference engineering code either in a separate storage device or directly in an internal storage space. However, the separate detection device and the separate storage device are not necessarily used, but some vehicles may be configured to autonomously perform a detection function and a storage function.

In accordance with the fault diagnosis method for a vehicle having the above-described configuration, a latent fault (trouble) in a vehicle may be detected in a production line or a repair shop, thus allowing a worker to promptly check and repair the vehicle.

Further, the present invention may determine latent abnormalities in vehicle parts and allow the parts to be suitably replaced in preparation for latent faults, thus enabling the vehicle to be maintained in an optimal state.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A fault diagnosis method for a vehicle, comprising the steps of:
Detecting (S10), by a controller, whether a reference engineering code (REC) has been generated, in which the reference engineering code (RCE) is generated in case an error count, occurring when any of specifications of a part falls out of normal range, is detected;
Measuring (S20), by the controller, a time for which the reference engineering code (REC) has been generated, if the reference engineering code (REC) has been generated as a result of performing the detecting step (S10);
Calculating (S30), by the controller, a percentage of the reference engineering code (REC), based on both the time for which the reference engineering code (REC) has been generated and a preset time, after the measuring step (S20);
Storing (S40), by the controller, the reference engineering code (REC) and the percentage of the reference engineering code (REC), after the calculating step (S30); and
when a request signal is received from a diagnostic device, providing (S60), by the controller, an output signal that includes the stored reference engineering code (REC) and the stored percentage of the reference engineering code (REC) to the diagnostic device, after the storing step (S40), wherein
the preset time is a time for which the reference engineering code (REC) has been generated until a diagnostic trouble code (DTC) is fixed.

2. The fault diagnosis method of claim 1, wherein the calculating step (S30) further comprises calculating, by the controller, the percentage of the reference engineering code (REC) by dividing the time for which the reference engineering code (REC) has been generated by the preset time and multiplying a resulting value by 100.

3. The fault diagnosis method of claims 1 or 2, wherein the diagnostic device is configured to transmit a request signal to the controller depending on manipulation of a user and to display the reference engineering code (REC) and the percentage of the reference engineering code (REC) in response to the output signal received from the controller.

4. The fault diagnosis method of any one of claims 1 to 3, further comprising, after the storing step (S40):
when a request signal is not received from the diagnostic device, again performing, by the controller, the detecting step (S10).

5. The fault diagnosis method of claim 4, further comprising, before the storing step (S40):
when a previously stored percentage of reference engineering code (REC) is less than the percentage of the reference engineering code (REC) currently calculated at the calculating step, storing, by the controller, the previously stored percentage of the reference engineering code (REC).

## Patentansprüche

1. Ein Fehlerdiagnoseverfahren für ein Fahrzeug, aufweisend die Schritte des:
Erfassens (S10) durch eine Steuereinrichtung, ob ein Referenz-Technikcode (REC) erzeugt wurde, wobei der Referenz-Technikcode (REC) erzeugt wird, falls ein Fehlerzählwert, welcher auftritt, wenn beliebige von Spezifikationen eines Bauteils aus einem Normalbereich fallen, erfasst wird,
Messens (S20), durch die Steuereinrichtung, einer Zeit, für welche der Referenz-Technikcode (REC) erzeugt wurde, falls der Referenz-Technikcode (REC) als ein Resultat des Durchführens des Erfassungsschritts (S10) erzeugt wurde,
Berechnens (S30), durch die Steuereinrichtung, eines Prozentsatzes des Referenz-Technikcodes (REC) basierend auf sowohl der Zeit, für welche der Referenz-Technikcode (REC) erzeugt wurde, als auch einer voreingestellten Zeit nach dem Messschritt (S20),
Speicherns (S40), durch die Steuereinrichtung, des Referenz-Technikcodes (REC) und des Prozentsatzes des Referenz-Technikcodes (REC) nach dem Berechnungsschritt (S30), und
wenn ein Anforderungssignal von einer Diagnosevorrichtung aus empfangen wird, Bereitstellens (S60), durch die Steuereinrichtung, eines Ausgabesignals, welches den gespeicherten Referenz-Technikcode (REC) und den gespeicherten Prozentsatz des Referenz-Technikcodes (REC) an die Diagnosevorrichtung nach dem Speicherschritt (S40), wobei
die voreingestellte Zeit eine Zeit ist, für welche der Referenz-Technikcode (REC) erzeugt wurde, bis ein Diagnosefehlercode (DTC) festgestellt wird.

2. Das Fehlerdiagnoseverfahren nach Anspruch 1, wobei der Berechnungsschritt (S30) ferner aufweist Berechnen, durch die Steuereinrichtung, des Prozentsatzes des Referenz-Technikcodes (REC) durch Dividieren der Zeit, für welche der Referenz-Technikcode (REC) erzeugt wurde, durch die voreingestellte Zeit und Multiplizieren eines resultierenden Werts mit 100.

3. Das Fehlerdiagnoseverfahren nach Anspruch 1 oder 2, wobei die Diagnosevorrichtung dazu eingerichtet ist, ein Anforderungssignal an die Steuereinrichtung in Abhängigkeit von einer Bedienung durch einen Nutzer zu senden und den Referenz-Technikcode (REC) und den Prozentsatz des Referenz-Technikcodes (REC) in Reaktion auf das von der Steuereinrichtung aus empfangene Ausgabesignal anzuzeigen.

4. Das Fehlerdiagnoseverfahren nach irgendeinem der Ansprüche 1 bis 3, ferner aufweisend, nach dem Speicherschritt (S40):
wenn ein Anforderungssignal nicht von der Diagnosevorrichtung aus empfangen wird, erneutes Durchführen, durch die Steuereinrichtung, des Erfassungsschritts (S10).

5. Das Fehlerdiagnoseverfahren nach Anspruch 4, ferner aufweisend, vor dem Speicherschritt (S40):
wenn ein zuvor gespeicherter Prozentsatz des Referenz-Technikcodes (REC) keiner ist als der Prozentsatz des Referenz-Technikcodes (REC), welcher gegenwärtig in dem Berechnungsschritt berechnet wird, dann Speichern, durch die Steuereinrichtung, des zuvor gespeicherten Prozentsatzes des Referenz-Technikcodes (REC).

## Revendications

1. Procédé de diagnostic de panne d'un véhicule, comprenant les étapes ci-dessous consistant à :
détecter (S10), par le biais d'un contrôleur, si un code d'ingénierie de référence (REC) a été généré, dans lequel le code d'ingénierie de référence (REC) est généré dans le cas où un comptage d'erreurs, se produisant lorsqu'une quelconque spécification parmi des spécifications d'une pièce tombe en dehors d'une plage normale, est détecté ;
mesurer (S20), par le biais du contrôleur, un temps pendant lequel le code d'ingénierie de référence (REC) a été généré, si le code d'ingénierie de référence (REC) a été généré à la suite de la mise en œuvre de l'étape de détection (S10) ;
calculer (S30), par le biais du contrôleur, un pourcentage du code d'ingénierie de référence (REC), à la fois sur la base du temps pendant lequel le code d'ingénierie de référence (REC) a été généré, et d'un temps prédéfini, après l'étape de mesure (S20) ;
stocker (S40), par le biais du contrôleur, le code d'ingénierie de référence (REC) et le pourcentage du code d'ingénierie de référence (REC), après l'étape de calcul (S30) ; et
lorsqu'un signal de demande est reçu en provenance d'un dispositif de diagnostic, fournir (S60), par le biais du contrôleur, un signal de sortie qui inclut le code d'ingénierie de référence (REC) stocké et le pourcentage stocké du code d'ingénierie de référence (REC), au dispositif de diagnostic, après l'étape de stockage (S40), dans lequel
le temps prédéfini est un temps pendant lequel le code d'ingénierie de référence (REC) a été généré jusqu'à ce qu'un code d'anomalie (DTC) soit déterminé.

2. Procédé de diagnostic de panne selon la revendication 1, dans lequel l'étape de calcul (S30) consiste en outre à calculer, par le biais du contrôleur, le pourcentage du code d'ingénierie de référence (REC), en divisant le temps pendant lequel le code d'ingénierie de référence (REC) a été généré par le temps prédéfini, et en multipliant une valeur résultante par 100.

3. Procédé de diagnostic de panne selon la revendication 1 ou 2, dans lequel le dispositif de diagnostic est configuré de manière à transmettre un signal de demande au contrôleur en fonction d'une manipulation par un utilisateur, et à afficher le code d'ingénierie de référence (REC) et le pourcentage du code d'ingénierie de référence (REC) en réponse au signal de sortie reçu en provenance du contrôleur.

4. Procédé de diagnostic de panne selon l'une quelconque des revendications 1 à 3, comprenant en outre, après l'étape de stockage (S40), l'étape ci-dessous consistant à :
lorsqu'un signal de demande n'est pas reçu en provenance du dispositif de diagnostic, mettre en œuvre à nouveau, par le biais du contrôleur, l'étape de détection (S10).

5. Procédé de diagnostic de panne selon la revendication 4, comprenant en outre, avant l'étape de stockage (S40), l'étape ci-dessous consistant à :
lorsqu'un pourcentage précédemment stocké de code d'ingénierie de référence (REC) est inférieur au pourcentage du code d'ingénierie de référence (REC) actuellement calculé à l'étape de calcul, stocker, par le biais du contrôleur, le pourcentage précédemment stocké du code d'ingénierie de référence (REC).
